# EUROPEAN PATENT SPECIFICATION

(11) **EP 1 896 351 B1**
(45) Date of publication and mention of the grant of the patent: **25.05.2011**
(21) Application number: 06755648.0
(22) Date of filing: 27.06.2006
(51) Int. Cl.: B65G 53/66

(54) **PNEUMATIC CONVEYING VELOCITY CONTROL DEVICE, APPARATUS AND METHOD**
GESCHWINDIGKEITSSTEUERVORRICHTUNG FÜR DRUCKLUFTFÖRDERUNG, EINRICHTUNG UND VERFAHREN
DISPOSITIF ET PROCEDE DE COMMANDE DE LA VITESSE DE TRANSPORT PNEUMATIQUE

(30) Priority: 27.06.2005 GB 0512998
(43) Date of publication of application: 12.03.2008
(73) Proprietor: Clean Cat Technologies Limited, Glasgow G74 5PA (GB)
(72) Inventor: SNOWDON, Brian, Doncaster DN11 9UJ (GB)
(74) Representative: Sanderson, Nigel Paul
(86) International application number: PCT/GB2006/002363
(87) International publication number: WO 2007/000589

(56) References cited:
- WO-A-00/39009
- WO-A-94/24031
- GB-A- 2 125 358
- US-A- 4 097 092
- PATENT ABSTRACTS OF JAPAN vol. 009, no. 206 (M-406), 23 August 1985 (1985-08-23) & JP 60 067325 A (BABCOCK HITACHI KK), 17 April 1985 (1985-04-17)

## Description

### Field of the invention

This invention relates to an apparatus for conveying of particulate matter according to the preamble of claim 1.

More particularly this invention relates to the conveyance of fragile particulate (especially granular) materials and especially to the conveyance of catalyst for and into oil refinery reactors.

### Background to the invention

Dense phase low velocity pneumatic conveying of dry fragile granular material is a well known concept which enables fragile granular material to be conveyed with low product breakage or dust generation.

This method of conveying is used for conveying products such as granulated sugar, soap powder, plastic pellets and catalyst used in oil refining reactors.

Low velocity dense phase conveying is normally achieved with the use of a 'blow pot' type of system which involves loading the material into a pressure vessel by gravity through an inlet valve in the top of the vessel, pressurising the vessel, opening an outlet valve in the base of the vessel which is connected to a conveying pipe, then pushing the material from the vessel into the conveying pipe with compressed gas until it is moved from the vessel into the conveying pipe. The outlet valve vessel is then closed and compressed gas may be put into the conveying pipe to keep the material moving as the vessel is depressurised through a vessel venting valve, and the vessel re-filled through the inlet valve. As soon as the vessel is full, the inlet valve is closed and the vessel pressurised to a pressure equal or higher than the conveying pipe before the outlet valve is opened, so that the material is pushed into the conveying pipe.

In this way, there are a number of vessel loads of material moving through the conveying pipe at the same time towards the receiving hopper or discharge point.

The pressure within the conveying vessel and the conveying pipe near the vessel will be at an elevated pressure which can, for example, be between 1 bar and 6 bar depending on the material being conveyed and the distance being conveyed.

If the receiving hopper or discharge point is at atmospheric pressure, the conveying gas will expand and the conveying velocity will increase as it progresses through the length of the conveying pipe.

For example, a system which operates with a starting pressure of 1 bar will double in velocity as it expands to atmospheric pressure. A system which starts at 4 bar pressure at the beginning of the system will have a velocity increase of 5 times the starting velocity by the time it gets to the receiving point or hopper.

It is well known in the industry that conveying pipe, and conveying pipe bend, wear and more importantly product breakage, is exponentially proportional to the conveying velocity to the power between 2.5 and 3.0.

It can be seen from the above that the majority of product breakage occurs towards the end of the conveying pipe, particularly where bends in pipe occur or discharge into the receiving point occur.

One partial solution to this problem is to increase the diameter in steps along the length of the conveying pipe towards the receiving point to reduce this effect. At each increase in pipe diameter, the superficial conveying gas velocity drops as the conveying gas enters the larger pipe. Due to the large expansion in conveying gas which occurs, this expansion effect can be reduced but not eliminated.

One effect that cannot be eliminated or controlled is the phenomenon of the material to collect and move in 'plugs' with conveying gas between the plugs. This is a natural effect of low velocity dense phase conveying. Towards the end of the system these gas pockets expand rapidly and uncontrollably near to and into the receiving point (receiving vessel) . This effect causes most of the product breakage on dense phase systems.

In addition to the type of dense phase conveying device described, there are other dense phase devices or methods of introducing material into the conveying pipe which have similar problems with conveying gas expansion to the one so far described.

For example, one alternative method is to use a large bulk storage transportable conveying device or tank, which may hold for example 15m³ to 20m³ of material to be conveyed. After conveying its contents to the receiving point, which can be carried out in one sequence or by a number of smaller batches, the vessel would be depressurised and taken away for re-filling. This method of operation with a large vessel in relation to the conveying pipe size can create more breakages than the smaller vessel 'blow pot' system due to the difficulty in controlling material velocity which is normally achieved by controlling the conveying gas flow in the vessel. The large vessel and compressive nature of the conveying gas results in fluctuations in vessel pressure and conveying velocity which do not respond quickly to changes in conveying gas flow to the vessel. There is also a tendency towards the end of the discharge period, as the vessel becomes empty, for the remaining contents to increase in velocity through the conveying pipe.

Another alternative method is the use of a so called 'high pressure rotary valve' or 'airlock' which can operate up to 3 bar pressure.

A further alternative method would be the use of a road or rail tanker which can be pressurised to convey the material to a storage silo.

An attempt to solve some of the above-mentioned problems is disclosed in WO/0039009 (Shultz International Application No.PCT/AU99/01138) whereby a constriction is provided at the end of the conveying pipe. The constriction is in the form of an annular orifice plate defining a central circular orifice which provides a discrete reduction of at least 20% in the effective cross-sectional area for the flow from the discharge end of the duct. This produces a discrete pressure drop of at least 5kPa. However although this constriction limits the effects of expanding conveying gas towards the end of the conveying pipe, this method would cause severe damage to a fragile product as it comes into contact with the construction and also as it increases in velocity through the constriction and then impacts on the receiving hopper wall.

US 4097092 describes an apparatus according to the preamble of claim 1 for preparing and conveying coal dust. Coal is stored in a hopper and transferred to a mill in which it is ground. From the mill the resulting coal dust is pneumatically conveyed to a cyclone separator. Air from the cyclone separator is vented to atmosphere and the coal dust is discharged to a storage tank. GB 2125358 describes an arrangement for minimising the pressure differential between a storage tank and a pneumatic conveying line during transfer of material from the storage tank to the conveying line.

### Brief Summary of the Invention

According to the present invention there is provided apparatus for conveying a particulate material from a first location to a second location at a controlled velocity, the apparatus comprising:
a duct having a first end and a second end, the first end being configured operatively to communicate with a first vessel in which the particulate material is initially disposed,
an intermediate vessel having an inlet communicating with the second end of the duct, and an outlet operable to allow particulate material to be transferred by gravity discharge directly or indirectly, from the intermediate vessel to the second location,
a supply of pressurised conveying gas in fluid communication with the duct for conveying the particulate material through the duct,
the intermediate vessel further comprising a pressure control arrangement configured to maintain the pressure within the intermediate vessel greater than atmospheric pressure.

In a preferred embodiment, the apparatus further comprises said first vessel in which the particulate material is initially disposed and operatively configured to communicate with a first end of said duct. Preferably the first vessel is a pressure vessel.

Preferably in this embodiment said first vessel is selected from the group consisting of; a dense phase blow pot, an ISO-Veyor™, a rotary valve arrangement or a road/rail tanker. An example of an ISO-Veyor™ is described in WO2005/087622 the contents of which are incorporated herein by reference.

In another preferred embodiment of the invention the pressure control arrangement includes means for separating the stream of particulate material and gas into a first stream containing a relatively high proportion of particulate material and a second stream containing a relatively low proportion of particulate material to gas, and means for restricting the gas flow in said second stream.

Whilst in WO/0039009 the particulate material is conveyed within the conveying gas through the restriction point, in the present invention the conveying gas and particulate matter are separated into different streams as they enter the device, and substantially only the conveying gas passes through the means for restricting the gas flow. As the particulate matter does not pass through the restriction to any significant extent it does not become damaged.

Preferably the pressure control arrangement includes means for venting the conveying gas from the intermediate vessel through a flow constricting orifice.

Preferably the means for restricting the gas flow in the second stream is a flow constricting orifice.

The restriction of flow of the venting of the conveying gas from the intermediate vessel leads to an elevation of pressure in the intermediate vessel to above atmospheric pressure. Operation of the intermediate vessel at above atmospheric pressure reduces the effect of gas expansion and also controls the flow of conveying gas from the intermediate vessel so as to eliminate the effect of rapidly expanding conveying gas pockets towards the end of the system.

By stopping the unstable rapid gas pocket expansion towards the end of the system, product breakage is further reduced. The net effect of these velocity reductions is to reduce by 50% or more, the damage to the material caused by excessive conveying velocity.

In preferred variations of the above embodiment, the content of particulate material in the second stream is minimal. In this respect, minimum content of particulate material is such as to allow the second stream to be discharged (e.g. to atmosphere) with only conventional filtering or dust removal apparatus. Preferably the second stream is vented, directly or indirectly, to atmosphere.

Preferably the orifice is within an annular orifice plate.

In further preferred embodiments, the apparatus further comprises a valve operable to control the flow of conveying gas in the vented gas stream.

Preferably in these embodiments the apparatus further comprises detection means operative to determine when the level of particulate material within the intermediate vessel has reached a predetermined level and wherein the valve is operable to prevent flow of conveyed particulate material into the intermediate vessel when said predetermined level is reached.

In particularly preferred embodiments the pressure within the intermediate vessel is at least 1 bar greater than atmospheric pressure. It is especially preferred that the pressure in the intermediate vessel is substantially constant.

Preferably the particulate material is a granular material.

Preferably the particulate material is a fragile particulate material.

Preferred particulate materials are selected from the group comprising crystalline sugars, soap powder, plastic pellets, catalysts and similarly fragile materials.

Catalysts can be particularly fragile. One such example comprises alumina ceramic needles of about 6mm long and 0.5mm in diameter. Conventionally catalyst is provided in large bags or drums which are lifted by a crane to the top of the oil refinery reactor, which can be some 40m high, resulting inevitably in significant damage to the catalyst material.

In preferred variations the catalyst is for use in oil refinery reactors.

In especially preferred embodiments the apparatus according to the invention further comprises a pressure change arrangement including
a pressure change vessel having an inlet operatively connectable to the outlet of the intermediate vessel, and an outlet operable to allow particulate material to be discharged, directly or indirectly, to the second location,
a supply of pressurized gas operable to increase the pressure in the pressure change vessel
a vent operable to reduce the pressure in the pressure change vessel by venting conveying gas directly or indirectly to atmosphere,
whereby the pressure within the pressure change vessel may be equalised with that in the intermediate vessel for discharge of the particulate material from the intermediate vessel to the pressure change vessel and may be substantially equalised with atmospheric pressure for discharge of the particulate material from the pressure change vessel.

An example of a apparatus of the invention is one in which the apparatus comprises an ISO-Veyor™ as the first vessel and a oil refinery reactor as a second vessel. The use of the device according to the invention within this apparatus enables the transfer of catalyst from the ISO-Veyor™ to the oil refinery reactor with negligible or minimal structural damage to the catalyst.

### Detailed description of the drawings

For a better understanding of the invention and to show how the same may be carried into effect, reference will be made, by way of example only, to the following drawings, in which:
Fig. 1 shows a schematic illustration of a device and apparatus according to the invention using a dense phase blow pot.
Fig. 2 shows a schematic illustration of a device and apparatus according to the invention using a using a large bulk storage transportable vessel.
Fig. 3 shows a schematic illustration of a device and apparatus according to the invention using a using a rotary valve.
Fig. 4 shows a schematic illustration of a device and apparatus according to the invention using a using a road/rail tanker.

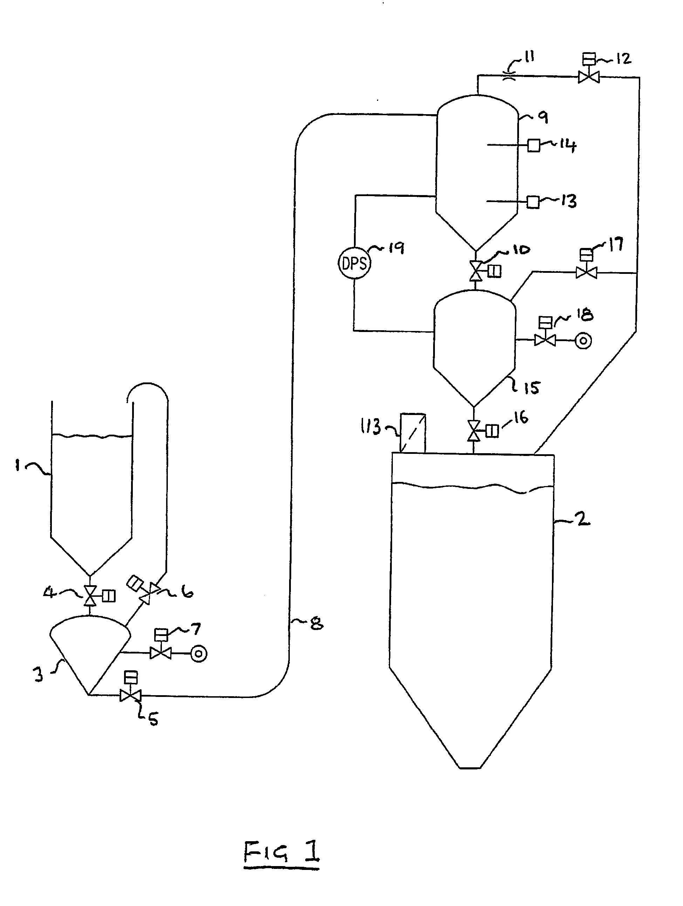

Fig. 1 shows the device and apparatus of the invention using a dense phase blowpot system. Storage hopper 1 (forming the first location of the particulate material) holds material which is to be conveyed to storage hopper 2 (forming the second location of the particulate material). For transfer of the particulate material into blowpot 3, initially conveying air valve 7 and the outlet valve 5 are closed. Vent valve 6 is open. Blowpot 3 is filled by gravity through open inlet valve 4. When the first vessel (blowpot) 3 is full, the inlet valve 4 and vent valve 6 close. Conveying gas inlet valve 7 and the outlet valve 5 now open and material is conveyed down pipe (duct) 8 towards intermediate vessel 9. Intermediate vessel 9 has an outlet valve 10. The intermediate vessel 9 has an outlet whereby conveying gas vents from vessel 9 through constricting orifice 11. Thus the stream of particulate material and gas separates into a first stream containing a relatively high proportion of particulate material which is retained in the intermediate vessel and a second stream containing a relatively low proportion of particulate material to gas which vents through orifice 11 and valve 12 into hopper 2 which has a venting filter 113. This vented conveying gas may alternatively be vented to a separate filtration system if required.

Vessel 9 is relatively small. By controlling the vent flow from vessel 9 into orifice 11, it is possible to raise the pressure at the receiving point (that is, the discharge point of duct 8 into intermediate vessel 9) and therefore reduce the effects of gas expansion previously described. The raised pressure and controlled flow also considerably reduce the effect of rapid gas expansion into the receiving point. Valve 12 can also be used to stop material flow into vessel 9 if vessel 9 becomes overfilled, as detected by level switch 14 or by a calculation based on level switch 13 being covered for a given predetermined time period.

To maintain a substantially constant flow of conveying gas through vessel 9 and a substantially constant pressure, it is desirable to fit a lock hopper 15 between vessel 9 and hopper 2. Lock hopper 15 is also a pressure vessel which is connected to intermediate vessel 9 by outlet 10. Lock hopper 15 has a vent line controlled by valve 17 and a pressurized gas supply controlled by valve 18. The outlet of lock hopper 15 is controlled by valve 16. Initially before there is sufficient material in vessel 9 to cover level switch 13, inlet valve 10, outlet valve 16, vent valve 17 and gas inlet valve 18 are closed. When level switch 13 is covered by material, valve 18 opens, increasing the pressure in vessel 15 until it is the same as vessel 9, indicated by differential pressure switch or transducer 19 when valve 18 closes. Inlet valve 10 now opens and contents of vessel 9 fall into vessel (lock hopper) 15. After a time period valve 10 closes and vent valve 17 opens, allowing the vessel pressure to vent into hopper 2 or other dust extraction system. When the pressure in vessel 15 reaches atmospheric pressure valve 16 opens, allowing the material to flow by gravity into hopper 2. When vessel 15 is empty, valve 16 closes and the lock hopper 15 is ready to cycle again when level switch 13 is covered. During the period when the lock hopper is in operation, material continues to be conveyed into vessel 9.

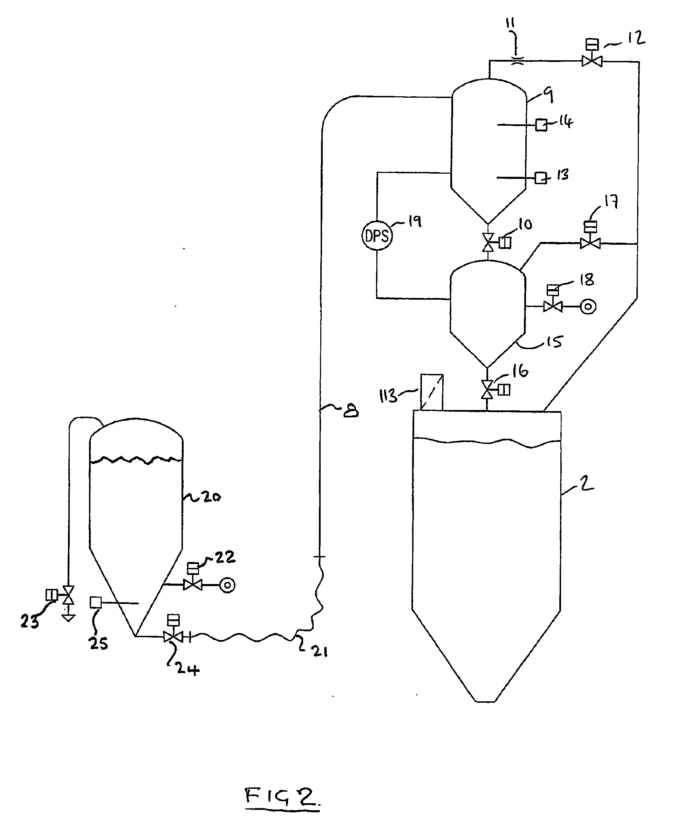

Fig. 2 shows the device being used with a large transportable bulk storage vessel 20.

This vessel is normally connected to the conveying pipe (duct) 8 with a flexible hose 21. The operating method for this large vessel system is to open gas inlet valve 22. Pressure let down valve 23 and outlet valve 24 are closed. At a pressure sufficient to convey the material, valve 24 is opened and conveying commences. The velocity controlling device operates as previously described until the bulk storage vessel 20 is empty as indicated by level switch 25 or a weighing system connected to vessel 20. When vessel 20 is empty, the pressure in vessel 20 may be allowed to dissipate through the conveying pipe to the velocity control device or by opening vent valve 23 after closing gas inlet valve 22.

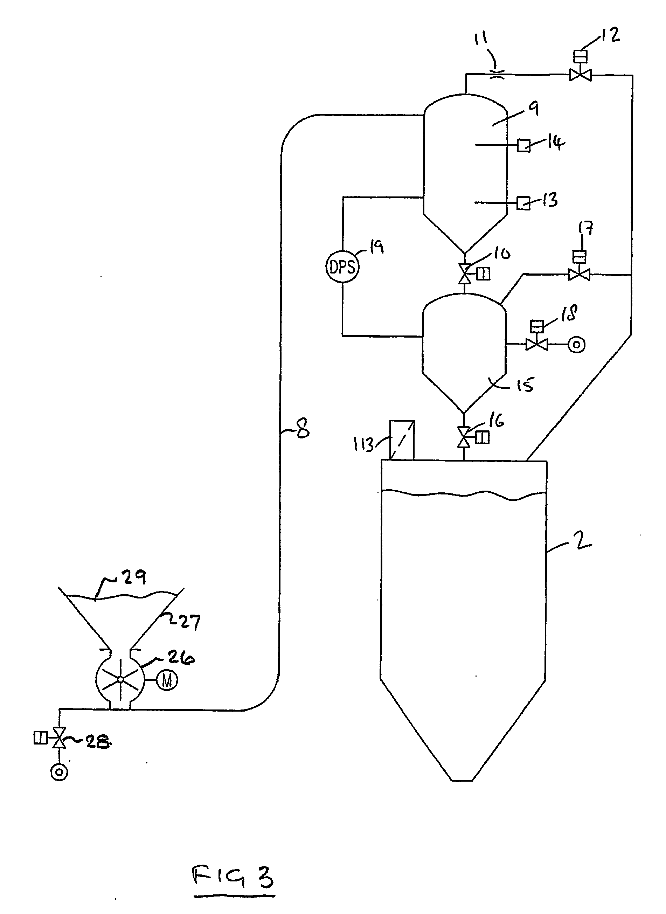

Fig. 3 shows the basic concept using a rotary valve 26. This type of valve may also be known as an airlock and can operate up to a pressure of 3 bar.

Rotary valve 26 is operated by a motor and moves materials 29 from an atmospheric feed hopper 27 into the conveying pipe 8. The velocity control device will operate as previously described with the additional function of stopping rotary valve 26 and closing conveying gas valve 28 when level switch 14 is covered, then starting the rotary valve and opening the conveying gas valve again as level switch 14 becomes uncovered.

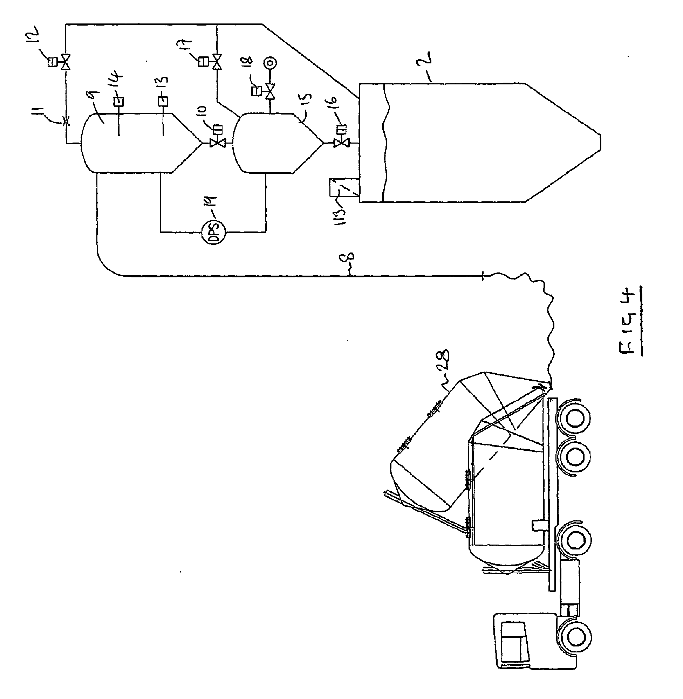

Fig. 4 shows the basic concept being used with a road or rail tanker 28. Road tankers for bulk granular materials may be a 'tipping' type as shown or a non- tipping type which has multiple outlets connected to a common discharge pipe. The non-tipping type method is also used on rail tankers. Both of these types are well known in the industry but are not currently used for very fragile materials because of the material breakage which occurs when unloading.

Both the tipping and non tipping type of pneumatic bulk transport tanker will operate in a similar way to the transportable tank shown in Fig. 2.

## Claims

1. Apparatus for conveying a particulate material from a first location (1) to a second location (2) at a controlled velocity, the apparatus comprising:
a duct (8) having a first end and a second end, the first end being configured operatively to communicate with a first vessel (1, 3) in which the particulate material is initially disposed,
an intermediate vessel (9) having an inlet communicating with the second end of the duct (8), and an outlet operable to allow particulate material to be transferred by gravity discharge, directly or indirectly, from the intermediate (9) vessel to the second location (2),
a supply of pressurised conveying gas in fluid communication with the duct (8) for conveying the particulate material through the duct (8),
**characterised in that** the intermediate vessel (9) further comprises a pressure control arrangement (11, 12) configured to maintain the pressure within the intermediate vessel (9) greater than atmospheric pressure.

2. Apparatus as claimed in claim 1 further comprising said first vessel (1, 3) in which the particulate material is initially disposed and operatively configured to communicate with a first end of said duct (8).

3. An apparatus as claimed in claim 2 wherein said first vessel (1, 3) is selected from the group consisting of; a dense phase blow pot (3), a rotary valve arrangement or a road/rail tanker.

4. Apparatus as claimed in claim 1, 2 or 3 wherein the pressure control arrangement (11, 12) includes means for separating the stream of particulate material and gas into a first stream containing a relatively high proportion of particulate material and a second stream containing a relatively low proportion of particulate material to gas, and means (11) for restricting the gas flow in said second stream.

5. Apparatus as claimed in claim 1, 2 or 3 wherein the pressure control arrangement includes means for venting the conveying gas from the intermediate vessel (9) through a flow constricting orifice (11).

6. Apparatus as claimed in claim 4 wherein the means for restricting the gas flow in the second stream is a flow constricting orifice (11).

7. Apparatus as claimed in claim 4 or 6 wherein the content of particulate material in the second stream is minimal.

8. Apparatus as claimed in claim 4, 6 or 7 wherein the second stream is vented, directly or indirectly, to atmosphere.

9. Apparatus as claimed in any of claims 5 or 6 wherein the orifice is within an annular orifice plate.

10. Apparatus as claimed in any of claims 5, 8 or 9 further comprising a valve (12) operable to control the flow of conveying gas in the vented gas stream.

11. Apparatus as claimed in claim 10 further comprising detection means (14) operative to determine when the level of particulate material within the intermediate vessel (9) has reached a predetermined level and wherein the valve (12) is operable to prevent flow of conveyed particulate material into the intermediate vessel (9) when said predetermined level is reached.

12. Apparatus as claimed in any of claims 1 to 11 wherein the pressure within the intermediate vessel (9) is at least 1 bar greater than atmospheric pressure.

13. Apparatus as claimed in any of claims 1 to 12 wherein the particulate material is a granular material.

14. Apparatus as claimed in any of claims 1 to 13 wherein the particulate material is a fragile particulate material.

15. Apparatus as claimed in any of claims 1 to 14 wherein the particulate material is selected from the group comprising crystalline sugars, soap powder, plastic pellets, catalysts and similarly fragile materials.

16. Apparatus as claimed in claim 15, wherein the catalyst is for use in oil refinery reactors.

17. Apparatus as claimed in any of claims 1 to 16 further comprising a pressure change arrangement including
a pressure change vessel (15) having an inlet operatively connectable to the outlet of the intermediate vessel (9), and an outlet operable to allow particulate material to be discharged, directly or indirectly, to the second location (2),
a supply of pressurized gas operable to increase the pressure in the pressure change vessel (15)
a vent operable to reduce the pressure in the pressure change vessel (15) by venting conveying gas directly or indirectly to atmosphere,
whereby the pressure within the pressure change vessel (15) may be equalised with that in the intermediate vessel (9) for discharge of the particulate material from the intermediate vessel (9) to the pressure change vessel (15) and may be substantially equalised with atmospheric pressure for discharge of the particulate material from the pressure change vessel (15).

## Patentansprüche

1. Vorrichtung zum Befördern von Teilchenmaterial von einer ersten Position (1) an eine zweite Position (2) mit geregelter Geschwindigkeit, wobei die Vorrichtung folgendes umfasst:
eine Durchführung (8) mit einem ersten Ende und einem zweiten Ende, wobei das erste Ende operativ so konfiguriert ist, dass es mit einem ersten Behälter (1, 3) kommuniziert, in dem sich das Teilchenmaterial ursprünglich befindet;
einen intermediären Behälter (9) mit einem Einlass, der mit dem zweiten Ende der Durchführung (8) kommuniziert, und mit einem Auslass, der so funktionsfähig ist, dass er die Übertragung von Teilchenmaterial direkt oder indirekt durch Schwerkraftentleerung aus dem intermediären Behälter (9) an die zweite Position (2) ermöglicht;
eine Versorgungseinrichtung für an unter Druck stehendes Fördergas in Fluidkommunikation mit der Durchführung (8) zum Fördern des Teilchenmaterials durch die Durchführung (8);
**dadurch gekennzeichnet, dass** der intermediäre Behälter (9) ferner eine Druckregelungsanordnung (11, 12) umfasst, die so konfiguriert ist, dass der Druck in dem intermediären Behälter (9) oberhalb eines Umgebungsdrucks gehalten wird.

2. Vorrichtung nach Anspruch 1, wobei diese ferner den genannten ersten Behälter (1, 3) umfasst, in dem sich das Teilchenmaterial ursprünglich befindet, und wobei der Behälter operativ so konfiguriert ist, dass er mit einem ersten Ende der genannten Durchführung (8) kommuniziert.

3. Vorrichtung nach Anspruch 2, wobei der genannte erste Behälter (1, 3) aus der Gruppe ausgewählt wird, die folgendes umfasst: einen Dichtstrom-Ausblaskessel (3), eine Drehschieberanordnung oder einen Straßen-/Schienen-Tankwagen.

4. Vorrichtung nach Anspruch 1, 2 oder 3, wobei die Druckregelunganordnung (11, 12) eine Einrichtung zum Trennen des Stroms von Teilchenmaterial und Gas in einen ersten Strom mit einem verhältnismäßig hohen Anteil Teilchenmaterial und in einen zweiten Strom mit einem verhältnismäßig niedrigen Verhältnis von Teilchenmaterial zu Gas aufweist, und mit einer Einrichtung (11) zur Begrenzung der Gasströmung in dem genannten zweiten Strom.

5. Vorrichtung nach Anspruch 1, 2 oder 3, wobei die Druckregelungsanordnung eine Einrichtung zum Entlüften des Fördergases aus dem intermediären Behälter (9) durch eine Strömungsbegrenzungsöffnung (11) aufweist.

6. Vorrichtung nach Anspruch 4, wobei es sich bei der Einrichtung zur Begrenzung der Gasströmung in dem zweiten Strom um eine Strömungsbegrenzungsöffnung (11) handelt.

7. Vorrichtung nach Anspruch 4 oder 6, wobei der Anteil des Teilchenmaterials in dem zweiten Strom minimal ist.

8. Vorrichtung nach Anspruch 4, 6 oder 7, wobei der zweite Strom direkt oder indirekt in die Atmosphäre entlüftet wird.

9. Vorrichtung nach einem der Ansprüche 5 oder 6, wobei sich die Öffnung in einer ringförmigen Öffnungsplatte befindet.

10. Vorrichtung nach einem der Ansprüche 5, 8 oder 9, wobei diese ferner ein Ventil (12) umfasst, das so funktionsfähig ist, dass es die Strömung des Fördergases in dem entlüfteten Gasstrom regelt.

11. Vorrichtung nach Anspruch 10, wobei diese ferner eine Detektionseinrichtung (14) umfasst, um zu bestimmen, wann das Niveau des Teilchenmaterials in dem intermediären Behälter (9) ein vorbestimmtes Niveau erreicht hat, und wobei das Ventil (12) so arbeiten kann, dass es die Strömung von gefördertem Teilchenmaterial in den intermediären Behälter (9) verhindert, wenn das genannte vorbestimmte Niveau erreicht wird.

12. Vorrichtung nach einem der Ansprüche 1 bis 11, wobei der Druck in dem intermediären Behälter (9) um mindestens 1 bar über dem Umgebungsdruck liegt.

13. Vorrichtung nach einem der Ansprüche 1 bis 12, wobei es sich bei dem Teilchenmaterial um körniges Material handelt.

14. Vorrichtung nach einem der Ansprüche 1 bis 13, wobei es sich bei dem Teilchenmaterial um zerbrechliches Teilchenmaterial handelt.

15. Vorrichtung nach einem der Ansprüche 1 bis 14, wobei das Teilchenmaterial aus der Gruppe ausgewählt wird, die folgendes umfasst: kristallinen Zucker, Seifenpulver, Kunststoffkügelchen, Katalysatoren und ähnliche zerbrechliche Materialien.

16. Vorrichtung nach Anspruch 15, wobei der Katalysator zum Einsatz in Erdölraffineriereaktoren vorgesehen ist.

17. Vorrichtung nach einem der Ansprüche 1 bis 16, wobei diese ferner eine Druckregelungsanordnung umfasst, die folgendes aufweist:
einen Druckregelungsbehälter (15) mit einem Einlass, der funktionsfähig mit dem Auslass des intermediären Behälters (9) verbunden werden kann, und mit einem Auslass, der so funktionsfähig ist, dass er die direkte oder indirekte Ausgabe von Teilchenmaterial an die zweite Position (2) ermöglicht;
eine Versorgungseinrichtung für unter Druck stehendes Gas, um den Druck in dem Druckregelungsbehälter (15) zu erhöhen;
eine Entlüftung, die so funktionsfähig ist, dass sie den Druck in dem Druckregelungsbehälter (15) durch direkte oder indirekte Entlüftung des Fördergases in die Umgebung reduziert;
wobei der Druck in dem Druckregelungsbehälter (15) an den Druck in dem intermediären Behälter (9) zum Ausstoßen des Teilchenmaterials aus dem intermediären Behälter (9) in den Druckregelungsbehälter (15) angeglichen werden kann, und wobei der Druck zum Ausstoßen des Teilchenmaterials aus dem Druckregelungsbehälter (15) im Wesentlichen an den Umgebungsdruck angeglichen werden kann.

## Revendications

1. Appareil pour transporter une matière particulaire d'un premier emplacement (1) à un second emplacement (2) à une vitesse contrôlée, l'appareil comprenant :
un conduit (8) ayant une première extrémité et une seconde extrémité, la première extrémité étant configurée de manière opérationnelle pour communiquer avec un premier récipient (1, 3) dans lequel la matière particulaire est initialement disposée,
un récipient intermédiaire (9) ayant une entrée communiquant avec la seconde extrémité du conduit (8), et une sortie pouvant fonctionner pour permettre à la matière particulaire d'être transférée par écoulement par gravité, directement ou indirectement, du récipient intermédiaire (9) au second emplacement (2),
une alimentation en gaz de transport sous pression en communication fluidique avec le conduit (8) pour transporter la matière particulaire à travers le conduit (8),
**caractérisé en ce que** le récipient intermédiaire (9) comprend en outre un agencement de contrôle de pression (11, 12) configuré pour maintenir la pression à l'intérieur du récipient intermédiaire (9) supérieure à la pression atmosphérique.

2. Appareil selon la revendication 1, comprenant en outre ledit premier récipient (1, 3) dans lequel la matière particulaire est initialement disposée et configuré de manière opérationnelle pour communiquer avec une première extrémité dudit conduit (8).

3. Appareil selon la revendication 2, dans lequel ledit premier récipient (1, 3) est choisi dans le groupe constitué de : une cuve de soufflage en phase dense (3), un agencement de soupapes rotatives ou un camion/wagon citerne.

4. Appareil selon la revendication 1, 2 ou 3, dans lequel l'agencement de contrôle de pression (11, 12) comprend des moyens pour séparer le flux de matière particulaire et le gaz en un premier flux contenant une proportion relativement élevée de matière particulaire et un second flux contenant une proportion relativement faible de matière particulaire par rapport au gaz, et des moyens (11) pour restreindre l'écoulement de gaz dans ledit second flux.

5. Appareil selon la revendication 1, 2 ou 3, dans lequel l'agencement de contrôle de pression comprend des moyens pour évacuer le gaz de transport depuis le récipient intermédiaire (9) à travers un orifice d'étranglement d'écoulement (11).

6. Appareil selon la revendication 4, dans lequel les moyens pour restreindre l'écoulement de gaz dans le second flux sont un orifice d'étranglement d'écoulement (11).

7. Appareil selon la revendication 4 ou 6, dans lequel la teneur en matière particulaire dans le second flux est minime.

8. Appareil selon la revendication 4, 6 ou 7, dans lequel le second flux est évacué, directement ou indirectement, vers l'atmosphère.

9. Appareil selon l'une quelconque des revendications 5 ou 6, dans lequel l'orifice est dans une plaque à orifice annulaire.

10. Appareil selon l'une quelconque des revendications 5, 8 ou 9 comprenant en outre une vanne (12) pouvant fonctionner pour contrôler l'écoulement de gaz de transport dans l'écoulement de gaz évacué.

11. Appareil selon la revendication 10, comprenant en outre des moyens de détection (14) fonctionnant pour déterminer lorsque le niveau de matière particulaire dans le récipient intermédiaire (9) a atteint un niveau prédéterminé et dans lequel la vanne (12) peut fonctionner pour empêcher l'écoulement de matière particulaire transportée dans le récipient intermédiaire (9) lorsque ledit niveau prédéterminé est atteint.

12. Appareil selon l'une quelconque des revendications 1 à 11, dans lequel la pression dans le récipient intermédiaire (9) est d'au moins 1 bar supérieure à la pression atmosphérique.

13. Appareil selon l'une quelconque des revendications 1 ou 12, dans lequel la matière particulaire est une matière granulaire.

14. Appareil selon l'une quelconque des revendications 1 à 13, dans lequel la matière particulaire est une matière particulaire fragile.

15. Appareil selon l'une quelconque des revendications 1 à 14, dans lequel la matière particulaire est choisie dans le groupe constitué de sucres cristallins, savon en poudre, granules de plastique, catalyseurs et matières également fragiles.

16. Appareil selon la revendication 15, dans lequel le catalyseur est pour une utilisation dans les réacteurs de raffinerie de pétrole.

17. Appareil selon l'une quelconque des revendications 1 à 16, comprenant en outre un agencement de changement de pression, comprenant
un récipient de changement de pression (15) ayant une entrée pouvant être connectée de manière opérationnelle à la sortie du récipient intermédiaire (9), et une sortie pouvant fonctionner pour permettre à la matière particulaire d'être déchargée, directement ou indirectement, vers le second emplacement (2),
une alimentation en gaz sous pression pouvant fonctionner pour augmenter la pression dans le récipient de changement de pression (15),
un évent pouvant fonctionner pour réduire la pression dans le récipient de changement de pression (15) en évacuant le gaz de transport, directement ou indirectement, dans l'atmosphère,
moyennant quoi la pression dans le récipient de changement de pression (15) peut être égalisée avec celle dans le récipient intermédiaire (9) pour la décharge de la matière particulaire depuis le récipient intermédiaire (9) dans le récipient de changement de pression (15) et peut être sensiblement égalisée avec la pression atmosphérique pour la décharge de la matière particulaire depuis le récipient de changement de pression (15).
